# EUROPEAN PATENT SPECIFICATION

(11) **EP 2 621 715 B1**
(45) Date of publication and mention of the grant of the patent: **12.04.2017**
(21) Application number: 11801864.7
(22) Date of filing: 09.12.2011
(51) Int. Cl.: B29C 70/44, B29L 31/08, F03D 1/06

(54) **METHOD OF MANUFACTURING A WIND TURBINE BLADE AND A WIND TURBINE BLADE**
VERFAHREN ZUR HERSTELLUNG EINER WINDTURBINENSCHAUFEL UND WINDTURBINENSCHAUFEL
PROCÉDÉ DE FABRICATION D'UNE PALE DE TURBINE ÉOLIENNE ET PALE DE TURBINE ÉOLIENNE

(43) Date of publication of application: 07.08.2013
(73) Proprietor: MITSUBISHI HEAVY INDUSTRIES, Ltd., Tokyo 108-8215 (JP)
(72) Inventor: JENZEWSKI, Dominique, 13088 Berlin (DE); CREMER, Andreas, London Greater London W1K 6WL (GB)
(74) Representative: RGTH
(86) International application number: PCT/JP2011/006904
(87) International publication number: WO 2013/084275

(56) References cited:
- WO-A1-95/20104
- WO-A1-03/035380
- US-A1- 2007 251 090
- US-A1- 2009 146 433
- US-A1- 2011 142 679
- US-A1- 2011 206 529

## Description

### [Technical Field]

The invention relates to a method of manufacturing a wind turbine blade. In a further aspect, the invention relates to a wind turbine blade produced by using the production method.

### [Background Art]

Since the trend in wind turbine development has evolved towards an enlarged size of wind turbines, also the size of the wind turbine blades has increased to a large extent, especially concerning the blades of offshore wind turbines. As a consequence of this development, manufacturing wind turbine blades is an extremely difficult task whose importance has risen significantly during the recent years.

Due to their enormous size, wind turbine blades are not manufactured in one piece. Usually, two blade half shells are manufactured separately and subsequently bonded. It is also common to produce each blade half shell in several production steps out of several blade half shell parts. These parts are bonded in a joining mold to form an entire blade half shell. For bonding the different blade half shell parts, usually adhesives such as gluing paste are used. A disadvantage of applying adhesives is the fact that its distribution and bonding strength can hardly be controlled, resulting in a varying quality of the connection.

US 2009/0155084 A1 discloses a manufacturing method for a wind turbine blade which tries to overcome the above mentioned problem. The described method includes the assembly of a plurality of wind turbine blade segments in the longitudinal direction of the blade. Bonding the different wind turbine blade segments using an adhesive is done by providing a bonding grid which enhances the distribution of the adhesive. A disadvantage of this solution is the arrangement of the blade into several segments in the longitudinal direction as this restricts the use of strengthening elements extending in the longitudinal direction of the blade such as spar caps. Another disadvantage is that the above method is very cumbersome and therefore does not decrease the effort related to bonding blade segments by adhesives.

Another major disadvantage which also increases the effort of manufacturing a wind turbine blade is the restricted access to the joining mold, therefore resulting in difficulties in placing blade building material or blade parts to be bonded in the joining mold.

WO 03/035380 A1 concerns a method for making aerodynamic structures using an assembly of mandrels including the steps of a first deposition of fibers on each mandrel to coat each mandrel and vacuum compaction of said fiber deposition and/or infusion of said deposition with a polymerizable resin.

In WO 95/20104 A1 a method of fabrication of aerodynamic profiles for aero-generator or aerodyne blades is disclosed, which consists of covering separately of moulds or mandrels (2) with composites of fibers impregnated with synthetic resins.

US 2009/0146433 A1 also discloses a method of assembling a wind turbine blade which includes forming a preform pressure surface member and a preform suction surface member.

US 2007/251090 A1 discloses a method for fabricating a blade using a mold having a shape corresponding to a predetermined finished shape of at least a portion of the blade.

In US 2011/206529 A1 a spar assembly for a rotor blade of a wind turbine is disclosed, which includes a first spar cap and a second spar cap spaced apart from the first spar cap such that a cross-sectional area is defined directly between the first and second spar cap.

US 2011/0142679 A1 discloses a method of manufacturing a rotor blade, which is divided into at least two segments for its production; the at least two segments are at least partially produced, mainly parallel in time, and then interconnected in an integration device.

### [Summary of Invention]

It is the object of the invention to provide an improved manufacturing method for wind turbine blades. It is a further object of the present invention to provide a wind turbine blade which is produced by the enhanced manufacturing method.

According to the present invention, the method of manufacturing a wind turbine blade according to claim 1 comprises the steps of pre-manufacturing a first blade member in a mold. The pre-manufactured first blade member includes a spar cap, said spar cap comprising composite material with fibers running in a longitudinal direction of the blade.

The pre-manufactured first blade member is placed in the center of a joining mold and bonded to a second blade member using a vacuum assisted infusion process to form an integrated part of the blade, wherein the second blade member is placed next to the pre-manufactured first blade member on each of its longitudinal sides respectively. In addition, the first blade member comprises a pair of bonding flanges for bonding said first blade member to the second blade member, the pair of bonding flanges being disposed at a trailing edge side and a leading edge side of the first blade member, respectively. Each of the bonding flanges extends continuously along the longitudinal direction of the pre-manufactured first blade member and has a flat extension. The step of bonding the first blade member with the second blade member includes arranging the pre-manufactured first blade member such that the flat extension of the bonding flange adjoins the joining mold and positioning blade building material forming the second blade member along the longitudinal sides of the pre-manufactured first blade member in such a way that the blade building material overlaps with the flat extension of the bonding flanges and then bonding the first blade member with the blade building material using a vacuum assisted infusion process, or positioning pre-manufactured second blade members such that a flange of each of the second blade members mates with the flat extension of the bonding flange of the first premanufactured blade member and then bonding the first blade member with the second blade members using a vacuum assisted infusion process.

The joining mold can either be the same mold in which the first blade member was pre-manufactured or a different mold.

A spar cap is the main structural member of the blade carrying its weight and the loads acting on it. The spar cap extends along substantially the entire length of the blade. In a further exemplary embodiment, the pre-manufactured first blade member comprises two spar caps which are connected by a strong shell structure. The shell structure can also comprise composite material, preferably a monolithic structure or a sandwich type structure.

Pre-manufacturing the first blade member can be done in one step by use of an infusion process or in several steps including pre-manufacturing the spar caps by infusion and connecting the spar caps and the shell structure by direct roving.

The bonding between the first and the second blade member is done using a vacuum assisted infusion process. The term "infusion process" relates to any bonding process including the step of infusing a bonding means for bonding. The term "vacuum assisted" means that a vacuum is applied to the area in which the bonding means is infused. Preferably, the vacuum is applied using a foil as a vacuum bag which is laid over the area to be infused allowing the creation of a vacuum. Once a vacuum is established, it ensures a uniform and controllable flow of the bonding means. Consequently, a good bonding quality can be achieved.

In a further exemplary embodiment, the method comprises the steps of curing the pre-manufactured first blade member, demolding it and transporting it to the joining mold in which it is bonded to a second blade member to form an integrated part of the blade member. Preferably, the integrated part of the blade is cured and bonded to other blade members, again using a vacuum assisted infusion process. These steps are repeated, until a half shell of the blade or the entire blade is completed. In this context, curing can refer to pre-curing, after which a certain extent of rigidity has been achieved but the full strength has not been established yet, or post-curing, after which the full strength of the member has developed.

According to the invention, the pre-manufactured first blade member is positioned in the center of the joining mold which is usually very hard to access by workers. Preferably, the pre-manufactured first blade member extends along substantially the entire length of the blade to be manufactured. Positioning an already pre-manufactured blade member in the central area of the joining mold eliminates the need for workers to walk inside the mold or to use cranes in order to access this central area. This simplifies the blade construction enormously since the usually very restricted access to the central areas of the joining mold is overcome.

Furthermore, the pre-manufactured first blade member, being positioned in the center of the joining mold and extending along its longitudinal direction, is sufficiently strong to be used for transporting and placing the second blade member in the joining mold. The pre-manufactured first blade member, in particular the spar cap, is adapted to be walked on by workers building the blade in order to position the second blade member in the joining mold.

The pre-manufactured first blade member comprises an, preferably integrated, bonding flange for the connection to other blade members. According to one of the alternatives of the claims the pre-manufactured second blade member comprises at least one bonding flange for the connection to the pre-manufactured first blade member. The first blade member comprises one bonding flange on each of its longitudinal sides, the trailing edge side and the leading edge side, respectively. In an exemplary embodiment the bonding flanges extend along the whole length of the leading edge side and trailing edge side of the first blade member. In another exemplary embodiment, the end faces of the pre-manufactured first blade member also comprise bonding flanges. In an exemplary embodiment, the bonding flange comprises a peel ply as a thin protective layer which is removed before the infusion process in order to ensure a good surface quality for the connection to another blade member.

In one embodiment of the invention, the second blade member comprises blade building material which is positioned in the joining mold overlapping the first blade member, namely its bonding flange. A vacuum is applied to the blade building material which is infused by bonding means, therefore infiltrating the blade building material with the bonding means. The second blade member is therefore formed during the bonding process to the first blade member. Preferably, bonding means comprise epoxy resin. The blade building material can be any "dry" material, meaning material which has not been infiltrated with bonding means before. The blade building material can, for example, comprise fibers, balsa, woven or stitched fabrics or sandwich cores. In a further exemplary embodiment, heat is applied to the integrated part for curing the bonding means. This can be achieved by use of an integrated heating system.

In an exemplary embodiment, a complete half shell of the blade is manufactured by applying the above method to each one of the bonding flanges on the trailing edge side and the leading edge side of the pre-manufactured first blade member, respectively. This is done by filling the joining mold along its transverse direction and bonding the blade material to the pre-manufactured first blade member until an entire blade half shell is produced.

In another embodiment, the second blade members are also pre-manufactured. Preferably, a pre-manufactured second blade member is placed next to the pre-manufactured first blade member in such a way that an interspace, a bonding gap, between the two blade members exists. The second blade member can be placed next to the pre-manufactured first blade member in cross direction or in longitudinal direction of the blade to be manufactured. The second blade member can also be positioned on top of the pre-manufactured first blade member. A vacuum is applied to the bonding gap, preferably by using a vacuum bag such as a plastic foil which enables an air tight seal so that a vacuum can be applied. Subsequently, the bonding gap is infused with bonding means, preferably epoxy resin, which after curing will establish the connection. Compared to using gluing paste, the use of epoxy resin in combination with a vacuum assisted infusion process is advantageous as it allows a better control of bonding gap thickness and bonding quality. Preferably, a flow medium is inserted in the bonding gap for allowing an even more improved flow of the bonding means. The flow medium can be a distribution means and is preferably structured, such as e.g. a mat, which provides passageways for the bonding means for a continuous and controllable flow. In another exemplary embodiment, the bonding gap is filled with some suitable sort of "dry" material, in particular comprising fabric or textile material, which will act as a flow medium for the bonding means. In a further exemplary embodiment, heat is applied to the integrated part for curing the bonding means, preferably by means of an integrated heating system.

In an exemplary embodiment, the above process is repeated until a half shell of a blade or an entire blade is manufactured. Preferably, the above method comprises the steps of curing the second pre-manufactured blade member, demolding it and transporting it to the joining mold. These steps can be repeated, until all remanufactured blade members are completed.

In another exemplary embodiment, the blade comprises a middle portion, a tip portion and a root portion. The pre-manufactured first blade member is bonded with at least one other blade member using a vacuum assisted infusion process in order to form an integrated part of the middle portion, the tip portion and the root portion of the blade, respectively. The integrated parts of the middle portion, tip portion and the root portion of the blade are consecutively bonded, preferably by a vacuum assisted infusion process, to form an entire blade or an entire blade half shell.

Preferably, the blade comprises a suction side and a pressure side in the transverse direction. The method of manufacturing a wind turbine blade comprises pre-manufacturing at least one spar cap, at least one shear web, at least one trailing edge part and at least one leading edge part, preferably in multiple pre molds. The pre-manufactured parts are bonded using a vacuum assisted infusion process for forming an entire blade or an entire blade half shell of the suction side and the pressure side respectively. This bonding process can also include other blade parts. Especially, the spar cap can be bonded to another spar cap via a strong shell structure, whereas this other blade part can comprise bonding flanges. Optionally, the corresponding blade half shells are consecutively bonded in order to form an entire blade.

In an exemplary embodiment, two spar caps and two shear webs are produced as well as one leading edge part and one trailing edge part. The pre-manufactured parts are placed in a joining mold and bonded by means of a vacuum assisted infusion process for forming an entire blade half shell. In an alternative exemplary embodiment, the leading edge part and the trailing edge part are both adapted to have one section which forms a part of the suction side of the blade and another section which forms a part of the pressure side of the blade. Therefore, after bonding the leading edge part and the trailing edge part with at least two pre-manufactured spar caps and preferably two pre-manufactured shear webs an entire blade is produced.

In a further exemplary embodiment, multiple leading edge parts and multiple trailing edge parts in longitudinal direction of the blade to be manufactured are pre-manufactured. These multiple leading edge parts and multiple trailing edge parts are bonded by means of a vacuum assisted infusion process to each other or to other pre-manufactured parts for forming an entire blade half shell or an entire blade.

In another exemplary embodiment, one or more pre-manufactured parts are bonded with a root reinforcement part in the joining mold using a vacuum assisted infusion process in order to form the root portion of the blade or the root portion of a blade half shell. The root portion refers to the part of the blade or the blade half shell which is located at its root end.

In an exemplary embodiment, outer root layers are placed on the surface of the root portion of the entire manufactured blade and bonded to the root portion using a vacuum assisted infusion process to form an outer root reinforcement part. Alternatively, fabric winding can be used for winding outer root layers around the root portion of the blade and therefore building up an outer root reinforcement part.

In another aspect of the invention, a wind turbine blade manufactured by using the method as claimed in any one of claims 1 to 14 is provided.

The joining mold can be the same mold in which the first blade member was pre-manufactured or a different mold.

Subsequently, said first blade member is bonded with a second blade member using a vacuum assisted infusion process for forming an integrated part of the blade which is in turn bonded with other blade members again using a vacuum assisted infusion process. This process is repeated until an entire blade or an entire blade half shell of the suction side and the pressure side is completed respectively. Optionally, said blade half shells are consecutively bonded in order to form an entire blade.

### [Brief Description of Drawings]

The invention will be described below with reference to the following figures which show in schematic representation
[Fig. 1]

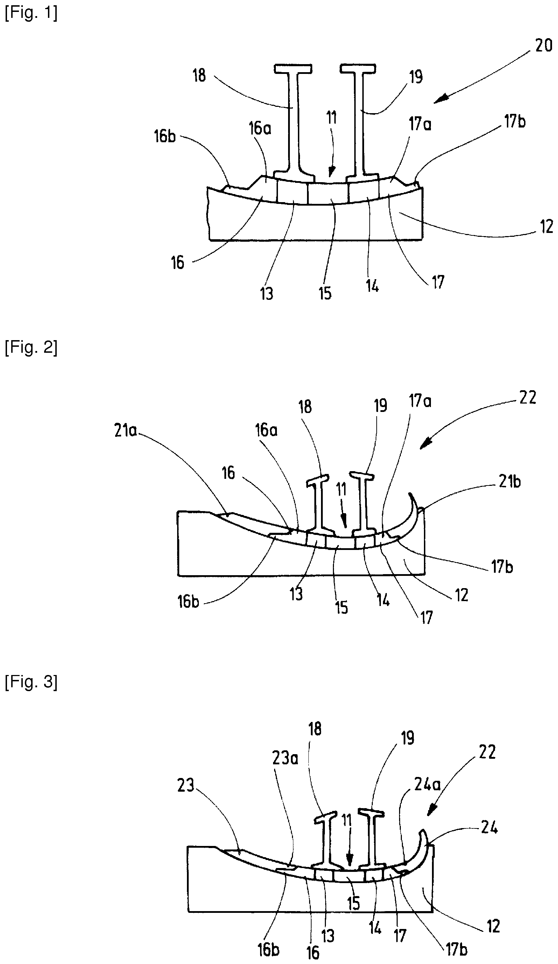

   Figure 1 is a cross sectional view of a pre-manufactured first blade member in a joining mold;
[Fig. 2]
   Figure 2 is a cross sectional view of the pre-manufactured first blade member of figure 1 and blade building material;
[Fig. 3]
   Figure 3 is a cross sectional view of a pre-manufactured first blade member and a second blade member in a joining mold in the area of the middle portion of a blade;
[Fig. 4]

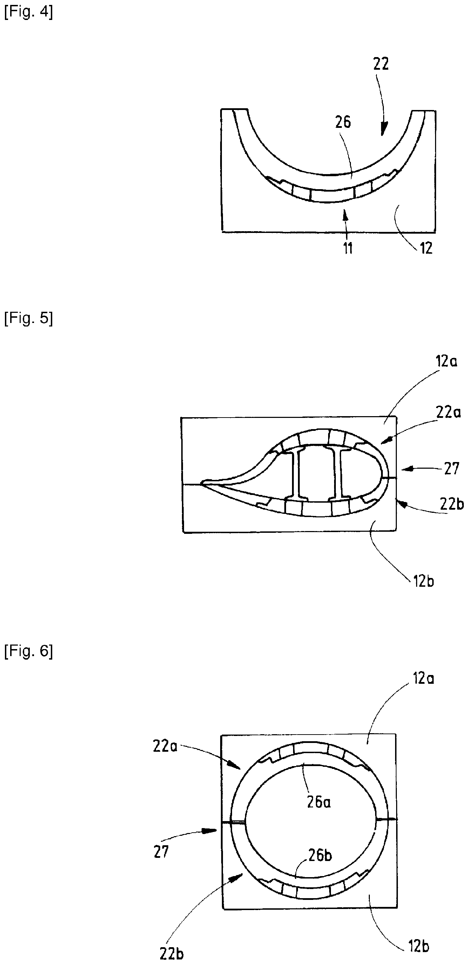

   Figure 4 is a cross sectional view of the pre-manufactured first blade member of figure 3 and an inner root reinforcement part in the area of the root portion of the blade;
[Fig. 5]
   Figure 5 is a cross sectional view of two corresponding blade half shells in the area of the middle portion of a blade;
[Fig. 6]
   Figure 6 is a cross sectional view of the two corresponding blade half shells of figure 5 in the area of the root portion of the blade; and
[Fig. 7]

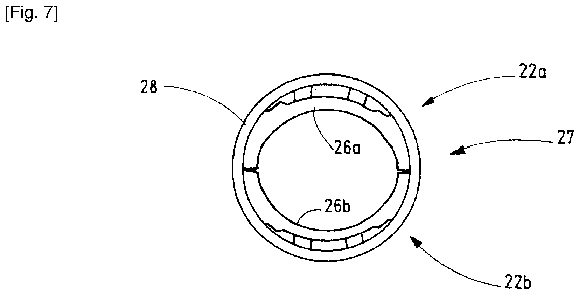

   Figure 7 is a cross sectional view of the root portion of the blade of figure 6 with an outer root reinforcement part.

### [Description of Embodiments]

Figure 1 shows a cross sectional view of a pre-manufactured first blade member 11 and of a section of a joining mold 12. The joining mold 12 comprises a shaped cavity which is utilized to give an intended form to a blade member or blade half shell to be manufactured. The pre-manufactured first blade member 11 comprises two spar caps 13, 14 which are connected to each other via a sandwich structure 15 consisting of a light weighted core surrounded by fiber reinforced material. Furthermore, the pre-manufactured first blade member 11 comprises two bonding flanges, namely one bonding flange 16 at the trailing edge side and one bonding flange 17 at the leading edge side of the pre-manufactured first blade member 11. The bonding flanges 16, 17 extend continuously along the longitudinal direction of the pre-manufactured first blade member 11. The bonding flanges 16, 17 comprise a first part 16a, 17a which is arranged adjoining the joining mold 12 and one spar cap 13, 14, respectively. Furthermore, the bonding flanges 16, 17 comprise a second part 16b, 17b which is formed integrally with the first part 16a, 17a. The second parts 16b, 17b are formed as a flat extension adjoining the joining mold 12. The bonding flanges 16, 17 together amount to about 30 to 50 percent of the width of the pre-manufactured first blade member 11 in cross direction. After positioning the pre-manufactured first blade member, it is bonded with two shear webs 18, 19 which form second blade members using a vacuum assisted infusion process so that an integrated blade part 20 is formed. For this purpose, one shear web 18, 19 is positioned on the inner side of one spar cap 13, 14 of the pre-manufactured first blade member 11, respectively.

In figure 2 a cross sectional view of the pre-manufactured first blade member 11 of figure 1 in the joining mold 12 is shown in which blade building material 21a, 21b is placed next to the pre-manufactured first blade member 11 on each of its longitudinal sides respectively. The blade building material 21a, 21b is positioned along the longitudinal sides of the pre-manufactured first blade member 11 in such a way that it overlaps with the second parts 16b, 17b of the bonding flanges 16, 17 of the pre-manufactured first blade member 11. The pre-manufactured first blade member 11 and the blade building material 21a, 21b are bonded using a vacuum assisted infusion process respectively by applying a vacuum to the blade building material 21a, 21b and infusing it with bonding means. As a result, two other blade members are formed during the two bonding processes. By means of the bonding processes, an entire blade half shell 22 is produced.

Figure 3 shows a cross sectional view of a pre-manufactured first blade member 11 comprising two spar caps 13, 14 in a joining mold 12 in the area of the middle portion of the blade half shell to be manufactured. The pre-manufactured first blade member 11 comprises a bonding flange 16 at the trailing edge side and a bonding flange 17 at its leading edge side. Next to the bonding flange 16 at the trailing edge side a pre-manufactured trailing edge part 23 is placed which comprises a mating flange 23a which corresponds to the bonding flange 16 of the pre-manufactured first blade member 11.

The pre-manufactured trailing edge part 23 is bonded to the pre-manufactured first blade member 11 using a vacuum assisted infusion process. At the bonding flange 17 at the leading edge side of the pre-manufactured first blade member 11 a pre-manufactured leading edge part 24 is positioned which also comprises a mating flange 24a corresponding to the bonding flange 17 of the pre-manufactured first blade member 11. The pre-manufactured leading edge part 24 is bonded to the pre-manufactured first blade member 11 by the use of a vacuum assisted infusion process. After the bonding processes, an entire half shell 22 of a blade is produced.

Figure 4 shows a cross-section of the pre-manufactured first blade member 11 of figure 3 in the area of the root portion of the blade half shell to be manufactured in the joining mold 12. On top of the pre-manufactured first blade member 11, another blade member, namely an inner root reinforcement 26, is placed. The inner root reinforcement 26 is bonded to the pre-manufactured first blade member 11 using a vacuum assisted infusion process to form the root portion of the entire blade half shell 22.

In Figure 5 a cross sectional view of two corresponding blade half shells is shown, namely one blade half shell of the pressure side 22a and one blade half shell of the suction side 22b of the blade. These blade half shells 22a, 22b are located in joining molds 12a, 12b, respectively, said molds 12a, 12b being joined for the bonding process. The half shells 22a, 22b are bonded by means of bonding paste so that an entire blade 27 is in the area of its middle portion is produced.

Figure 6 shows a cross sectional view of the two corresponding blade half shells 22a, 22b of figure 5 in the area of the root portion of the blade 27. The blade half shells 22a, 22b are also bonded by means of bonding paste so that an entire blade 27 in the area of its root portion is manufactured.

In figure 7, the entire blade 27 of figure 6 in the area of its root portion is shown. Outer root layers 28 are placed on the outer surface of the root portion of the entire manufactured blade 27 and bonded to the root portion using a vacuum assisted infusion process to form an outer root reinforcement part.

## Claims

1. A method for manufacturing a wind turbine blade, comprising the steps of:
pre-manufacturing a first blade member (11), including a spar cap (13, 14), said spar cap (13, 14) comprising composite material with fibers running in a longitudinal direction of the blade,
positioning said pre-manufactured first blade member (11) in the center of a joining mold (12, 12a, 12b), and bonding said first blade member (11) with a second blade member (21a, 21b, 23, 24) using a vacuum assisted infusion process so as to form an integrated blade part (20), wherein the second blade member is placed next to the pre-manufactured first blade member on each of its longitudinal sides respectively,
wherein the first blade member (11) comprises a pair of bonding flanges (16, 17) for bonding said first blade member (11) to the second blade member,
the pair of bonding flanges (16, 17) being disposed at a trailing edge side and a leading edge side of the first blade member (11), respectively,
wherein each of the bonding flanges (16, 17) extends continuously along the longitudinal direction of the pre-manufactured first blade member (11) and has a flat extension (16b, 17b),
wherein the step of bonding the first blade member (11) with the second blade member (21a, 21b, 23, 24) includes:
arranging the pre-manufactured first blade member (11) such that the flat extension (16b ,17b) of the bonding flange (16, 17) adjoins the joining mold (12); and
positioning blade building material (21a, 21b) forming the second blade member along the longitudinal sides of the pre-manufactured first blade member (11) in such a way that the blade building material (21a, 21b) overlaps with the flat extension (16b, 17b) of the bonding flanges (16, 17) and then bonding the first blade member (11) with the blade building material (21a, 21b) using a vacuum assisted infusion process,
or positioning pre-manufactured second blade members (23, 24) such that a flange (23a, 24a) of each of the second blade members (23, 24) mates with the flat extension of the bonding flange (16, 17) of the first premanufactured blade member and then bonding the first blade member (11) with the second blade members (23, 24) using a vacuum assisted infusion process.

2. The method according to claim 1, comprising the steps of:
curing the pre-manufactured first blade member (11),
demolding the pre-manufactured first blade member (11), and
transporting the pre-manufactured first blade member (11) to the joining mold (12, 12a, 12b).

3. The method according to claim 1, comprising the steps of:
curing the integrated blade part (20),
bonding the integrated blade part (20) with other blade members or other integrated blade parts using a vacuum assisted infusion process, and
repeating the above steps until the entire blade (27) or an entire half shell (22) of the blade is completed.

4. The method according to claim 1,
wherein the second blade member is made up of blade building material (21a, 21b), comprising the steps of:
positioning said blade building material (21a, 21b) in the joining mold (12, 12a, 12b), wherein at least part of the blade building material (21a, 21b) overlaps the first blade member (11),
applying a vacuum to the blade building material (21a, 21b), and
infusing the blade building material (21a, 21b) with bonding means.

5. The method according to claim 4,
wherein heat is applied to the integrated blade member (20) for curing the bonding means.

6. The method according to claim 1,
wherein the second blade member is pre-manufactured, comprising the steps of:
positioning said pre-manufactured second blade member next to the first blade member in the joining mold such that an interspace in between them exists,
applying a vacuum to said interspace between the first blade member and the second blade member, and
infusing bonding means into the interspace.

7. The method according to claim 6, comprising the steps of:
curing the pre-manufactured second blade member,
demolding the pre-manufactured second blade member, and
transporting the pre-manufactured second blade member to the joining mold.

8. The method according to claim 6,
wherein a flow medium for the bonding means is placed in the interspace between the first blade member and the second blade member.

9. The method according to claim 6,
wherein heat is applied to the integrated blade member for curing the bonding means.

10. The method according to claim 1,
wherein the blade comprises a middle portion, a tip portion and a root portion, comprising the steps of:
bonding the pre-manufactured first blade member (11) with at least one other blade member using a vacuum assisted infusion process in order to form an integrated part (20) of the middle portion, the tip portion and the root portion of the blade, respectively, and
bonding the integrated part (20) of the middle portion, the integrated part (20) of the tip portion and the integrated part (20) of the root portion to form an entire blade (27) or an entire blade half shell (22).

11. The method according to claim 1,
wherein the blade has a suction side (22b) and a pressure side (22a), comprising the steps of:
pre-manufacturing at least one spar cap (13, 14),
at least one shear web (18, 19), at least one trailing edge part (23) and at least one leading edge part (24),
bonding said pre-manufactured parts (13, 14, 18, 19, 23, 24) using a vacuum assisted infusion process in a joining mold (12, 12a, 12b) to form an entire blade (27) or an entire blade half shell (22) of the suction side (22b) and the pressure side (22a) respectively, and optionally,
bonding the blade half shell (22) of the suction side (22b) and the blade half (22) shell of the pressure side (22a) to form an entire blade (27).

12. The method according to claim 11,
wherein multiple trailing edge parts (23) in longitudinal direction and multiple leading edge part (24) in longitudinal direction are pre-manufactured and bonded to each other respectively or to other pre-manufactured parts using a vacuum assisted infusion process.

13. The method according to claim 11,
wherein one or more pre-manufactured parts (13, 14, 18, 19, 23, 24) are bonded with a root reinforcement part (26) in the joining mold (12, 12a, 12b) using a vacuum assisted infusion process to form a root portion of the entire blade (27) or the entire blade half shell (22).

14. The method according to claim 13,
wherein outer root layers (28) are placed on the surface of the root portion of the entire blade (27) or entire blade half shell (22), and wherein the root portion and the outer root layers (28) are bonded using a vacuum assisted infusion process.

15. A wind turbine blade manufactured by the method as claimed in any one of claims 1 to 14.

## Patentansprüche

1. Ein Verfahren zur Herstellung eines Windturbinenblattes, umfassend die Schritte:
Vorfertigung eines ersten Blattelelements (11), einschließlich eines Holmgurts (13, 14), wobei der Holmgurt (13, 14) einen Verbundwerkstoff mit in Längsrichtung des Blattes verlaufenden Fasern umfasst,
Positionieren des ersten Blattelelements (11) in der Mitte einer Fügeform (12, 12a, 12b) und Verbinden des ersten Blattelements (11) mit einem zweiten Blattelement (21a, 21b, 23, 24) unter Verwendung eines vakuumunterstützten Infusionsverfahrens, um ein integriertes Blattteil (20) zu formen, wobei das zweite Blattelement neben dem vorgefertigten ersten Blattelement jeweils an jeder seiner Längsseiten angeordnet wird,
wobei das erste Blattelement (11) ein Paar von Klebeflanschen (16, 17) umfasst, um das erste Blattelement (11) mit dem zweiten Blattelement zu verbinden,
wobei das Paar von Klebeflanschen (16, 17) an einer Hinterkantenseite bzw. an einer Vorderkantenseite des ersten Blattelements (11) angeordnet ist,
wobei jeder der Klebeflansche (16, 17) sich fortlaufend entlang der Längsrichtung des vorgefertigten ersten Blattelements (11) erstreckt und eine flache Verlängerung (16b, 17b) aufweist,
wobei der Schritt des Verbindens des ersten Blattelements (11) mit dem zweiten Blattelement (21a, 21b, 23, 24) Folgendes beinhaltet:
Anordnen des vorgefertigten ersten Blattelements (11) derart, dass die flache Verlängerung (16b, 17b) des Klebeflansches (16, 17) an der Fügeform (13) anliegt; und
Positionieren des das zweite Blattelement formenden Blattbaumaterials (21a, 21b) entlang der Längsseiten des vorgefertigten ersten Blattelements (11) derart, dass das Blattbaumaterial (21a, 21b) die flache Verlängerung (16b, 17b) der Klebeflansche (16, 17) überlappt, und anschließendes Verbinden des ersten Blattelements (11) mit dem Blattbaumaterial (21a, 21b) unter Verwendung eines vakuumunterstützten Infusionsverfahrens,
oder Positionieren von vorgefertigten zweiten Blattelementen (23, 24) derart, dass ein Flansch (23a, 24a) jedes der zweiten Blattelemente (23, 24) sich mit der flachen Verlängerung des Klebeflansches (16, 17) des ersten vorgefertigten Blattelements paart
und anschließendes Verbinden des ersten Blattelements (11) mit den zweiten Blattelementen (23, 24) unter Verwendung eines vakuumunterstützten Infusionsverfahrens.

2. Das Verfahren gemäß Anspruch 1, umfassend die Schritte:
Härten des vorgefertigten ersten Blattelements (11),
Entformen des vorgefertigten ersten Blattelements (11), und
Transportieren des vorgefertigten ersten Blattelements (11) zu der Fügeform (12, 12a, 12b).

3. Das Verfahren gemäß Anspruch 1, umfassend die Schritte:
Härten des integrierten Blattteils (20)
Verbinden des integrierten Blattteils (20) mit anderen Blattelementen oder anderen integrierten Blattteilen unter Verwendung eines vakuumunterstützten Infusionsverfahrens, und
Wiederholen der obigen Schritte, bis das gesamte Blatt (27) oder eine gesamte Halbschale (22) des Blatts fertiggestellt ist

4. Das Verfahren gemäß Anspruch 1,
wobei das zweite Blattelement aus Blattbaumaterial (21a, 21b) hergestellt wird, umfassend die folgenden Schritte:
Positionieren des Blattbaumaterials (21a, 21b) in der Fügeform (12, 12a, 12b),
wobei zumindest ein Teil des Blattbaumaterials (21a, 21b) das erste Blattelement (11) überlappt,
Anlegen eines Vakuums an das Blattbaumaterial (21a, 21b,) und
Infundieren des Blattbaumaterials (21a, 21b) mit Klebemitteln.

5. Das Verfahren gemäß Anspruch 4,
wobei das integrierte Blattelement (20) zum Aushärten der Klebemittel mit Wärme behandelt wird.

6. Das Verfahren gemäß Anspruch 1,
wobei das zweite Blattelement vorgefertigt wird, umfassend die folgenden Schritte:
Positionieren des vorgefertigten zweiten Blattelementes neben dem ersten Blattelement in der Fügeform derart, dass ein Zwischenraum dazwischen vorhanden ist,
Anlegen eines Vakuums an den Zwischenraum zwischen dem ersten Blattelement und dem zweiten Blattelement und
Infundieren von Klebemitteln in den Zwischenraum.

7. Das Verfahren gemäß Anspruch 6, umfassend die Schritte:
Härten des vorgefertigten zweiten Blattelements,
Entformen des vorgefertigten zweiten Blattelements, und
Transportieren des vorgefertigten zweiten Blattelements zu der Fügeform.

8. Das Verfahren gemäß Anspruch 6,
wobei ein Strömungsmedium für die Klebemittel in den Zwischenraum zwischen dem ersten Blattelement und dem zweiten Blattelement eingelegt wird.

9. Das Verfahren gemäß Anspruch 6,
wobei das integrierte Blattelement zum Aushärten der Klebemittel mit Wärme behandelt wird.

10. Das Verfahren gemäß Anspruch 1,
wobei das Blatt einen Mittelbereich, einen Spitzenbereich und einen Wurzelbereich umfasst, umfassend die folgenden Schritte:
Verbinden des vorgefertigten ersten Blattelements (11) mit wenigstens einem anderen Blattelement unter Verwendung eines vakuumunterstützten Infusionsverfahrens, um einen integrierten Teil (20) des Mittelbereichs bzw. des Spitzenbereichs oder des Wurzelbereichs des Blatts zu formen, und
Verbinden des integrierten Teils (20) des Mittelbereichs, des integrierten Teils (20) des Spitzenbereichs und des integrierten Teils (20) des Wurzelbereichs, um ein ganzes Blatt (27) oder eine ganze Blatthalbschale (22) zu formen.

11. Das Verfahren gemäß Anspruch 1,
wobei das Blatt eine Saugseite (22b) und eine Druckseite (22a) aufweist, umfassend die folgenden Schritte:
Vorfertigung mindestens eines Holmgurts (13, 14)
mindestens eines Scherstegs (18, 19), mindestens eines Hinterkantenteils (23) und mindestens eines Vorderkantenteils (24),
Verbinden der vorgefertigten Teile (13, 14, 18, 19, 23, 24) unter Verwendung eines vakuumunterstützten Infusionsverfahrens in einer Fügeform (12, 12a, 12b), um ein ganzes Blatt (27) oder eine ganze Blatthalbschale (22) der Saugseite (22b) bzw. der Druckseite (22a) zu formen, und gegebenenfalls Verbinden der Blatthalbschale (22) der Saugseite (22b) mit der Blatthalbschale (22) der Druckseite (22a), um eine ganzes Blatt (27) zu formen.

12. Das Verfahren gemäß Anspruch 11,
wobei mehrere Hinterkantenteile (23) in Längsrichtung und mehrere Vorderkantenteile (24) in Längsrichtung vorgefertigt werden und miteinander bzw. mit anderen vorgeformten Teilen unter Verwendung eines vakuumunterstützten Infusionsverfahrens verklebt werden.

13. Das Verfahren gemäß Anspruch 11,
wobei ein oder mehrere vorgefertigte Teile (13, 14, 18, 19, 23, 24) mit einem Wurzelverstärkungsteil (26) in der Fügeform (12, 12a, 12b) unter Verwendung eines vakuumunterstützten Infusionsverfahren verklebt werden, um einen Wurzelbereich des gesamten Blatts (27) oder der gesamten Blatthalbschale (22) zu formen.

14. Das Verfahren gemäß Anspruch 13,
wobei äußere Wurzelschichten (28) auf der Oberfläche des Wurzelbereichs des gesamten Blatts (27) oder der gesamten Blatthalbschale (22) angeordnet sind, und
wobei der Wurzelbereich und die äußeren Wurzelschichten (28) unter Verwendung eines vakuumunterstütztes Infusionsverfahrens verklebt sind.

15. Ein Windturbinenblatt, hergestellt in einem Verfahren gemäß einem der Ansprüche 1 bis 14.

## Revendications

1. Procédé de fabrication d'une pale d'éolienne, comprenant les étapes suivantes :
préfabrication d'un premier élément de pale (11), y compris une semelle de longeron (13, 14), ladite semelle de longeron (13, 14) comprenant un matériau composite dont les fibres sont disposées en direction longitudinale de la pale,
positionnement dudit premier élément de pale préfabriqué (11) au centre d'un moule de jonction (12, 12a, 12b), et collage dudit premier élément de pale (11) à un deuxième élément de pale (21a, 21b, 23, 24) à l'aide d'un processus d'infusion sous vide de manière à former une partie de pale intégrée (20), dans lequel le deuxième élément de pale est placé près du premier élément de pale préfabriqué respectivement sur chacun de ses côtés longitudinaux,
dans lequel le premier élément de pale (11) comprend une paire de brides de collage (16, 17) pour coller ledit premier élément de pale (11) au deuxième élément de pale,
les brides de la paire de brides de collage (16, 17) étant respectivement disposées sur un côté de bord de fuite et un côté bord d'attaque du premier élément de pale (11),
dans lequel chacune desdites brides de collage (16, 17) s'étend de manière continue selon la direction longitudinale du premier élément de pale préfabriqué (11) et présente une extension plane (16b, 17b),
dans lequel l'étape de collage du premier élément de pale (11) au deuxième élément de pale (21a, 21b, 23, 24) comprend :
l'agencement du premier élément de pale préfabriqué (11) de telle sorte que l'extension plane (16b ,17b) de la bride de collage (16, 17) est adjacente au moule de jonction (12) ; et
le positionnement d'un matériau constitutif de pale (21a, 21b) formant le deuxième élément de pale selon les côtés longitudinaux du premier élément de pale préfabriqué (11) de telle sorte que le matériau constitutif de pale (21a, 21b) présente un chevauchement avec l'extension plane (16b, 17b) des brides de collage (16, 17), et ensuite le collage du premier élément de pale (11) au matériau constitutif de pale (21a, 21b) à l'aide d'un processus d'infusion sous vide,
ou le positionnement de deuxièmes éléments de pale préfabriqués (23, 24) de telle sorte qu'une bride (23a, 24a) de chacun des deuxièmes éléments de pale (23, 24) s'accouple à l'extension plane de la bride de collage (16, 17) du premier élément de pale préfabriqué et ensuite le collage du premier élément de pale (11) aux deuxièmes éléments de pale (23, 24) à l'aide d'un processus d'infusion sous vide.

2. Procédé selon la revendication 1, comprenant les étapes suivantes :
durcissement du premier élément de pale préfabriqué (11),
démoulage du premier élément de pale préfabriqué (11), et
transport du premier élément de pale préfabriqué (11) jusqu'au moule de jonction (12, 12a, 12b).

3. Procédé selon la revendication 1, comprenant les étapes suivantes :
durcissement de la partie de pale intégrée (20),
collage de la partie de pale intégrée (20) à d'autres éléments de pale ou à d'autres parties de pale intégrées à l'aide d'un processus d'infusion sous vide, et
répétition des étapes qui précèdent jusqu'à ce que la pale entière (27) ou une demi-coque entière (22) de la pale soit achevée.

4. Procédé selon la revendication 1,
dans lequel le deuxième élément de pale est constitué d'un matériau constitutif de pale (21a, 21b), comprenant les étapes suivantes :
positionnement dudit matériau constitutif de pale (21a, 21b) dans le moule de jonction (12, 12a, 12b), dans lequel au moins une partie du matériau constitutif de pale (21a, 21b) présente un chevauchement avec le premier élément de pale (11),
application du vide au matériau constitutif de pale (21a, 21b), et
infusion du matériau constitutif de pale (21a, 21b) avec le moyen de collage.

5. Procédé selon la revendication 4,
dans lequel de la chaleur est appliquée à l'élément de pale intégré (20) pour durcir le moyen de collage.

6. Procédé selon la revendication 1,
dans lequel le deuxième élément de pale est préfabriqué, comprenant les étapes suivantes :
positionnement dudit deuxième élément de pale préfabriqué près du premier élément de pale dans le moule de jonction de manière à créer un espace intermédiaire entre eux,
application du vide audit espace intermédiaire entre le premier élément de pale et le deuxième élément de pale, et
infusion du moyen de collage dans l'espace intermédiaire.

7. Procédé selon la revendication 6, comprenant les étapes suivantes :
durcissement du deuxième élément de pale préfabriqué,
démoulage du deuxième élément de pale préfabriqué, et
transport du deuxième élément de pale préfabriqué jusqu'au moule de jonction.

8. Procédé selon la revendication 6,
dans lequel un milieu d'écoulement pour le moyen de collage est placé dans l'espace intermédiaire entre le premier élément de pale et le deuxième élément de pale.

9. Procédé selon la revendication 6,
dans laquelle de la chaleur est appliquée à l'élément de pale intégré pour durcir le moyen de collage.

10. Procédé selon la revendication 1,
dans lequel la pale comprend une portion médiane, une portion de pointe et une portion de pied, comprenant les étapes suivantes :
collage du premier élément de pale préfabriqué (11) à au moins un autre élément de pale en utilisant un processus d'infusion sous vide de manière à former respectivement une partie intégrée (20) de la portion médiane, de la portion de pointe et de la portion de pied de la pale, et
collage de la partie intégrée (20) de la portion médiane, de la partie intégrée (20) de la portion de pointe et de la partie intégrée (20) de la portion de pied pour former une pale entière (27) ou une demi-coque de pale entière (22).

11. Procédé selon la revendication 1,
dans lequel la pale comporte un côté dépression (22b) et un côté surpression (22a), comprenant les étapes suivantes :
préfabrication d'au moins une semelle de longeron (13, 14),
d'au moins une âme de cisaillement (18, 19), d'au moins une partie de bord de fuite (23) et d'au moins une partie de bord d'attaque (24),
collage desdites parties préfabriquées (13, 14, 18, 19, 23, 24) à l'aide d'un processus d'infusion sous vide dans un moule de jonction (12, 12a, 12b) pour former respectivement une pale entière (27) ou une demi-coque de pale entière (22) du côté dépression (22b) et du côté surpression (22a), et éventuellement
collage de la demi-coque de pale (22) du côté dépression (22b) et de la demi-coque de pale (22) du côté surpression (22a) pour former une pale entière (27).

12. Procédé selon la revendication 11,
dans lequel de multiples parties de bord de fuite (23) en direction longitudinale et de multiple parties de bord d'attaque (24) en direction longitudinale sont respectivement préfabriquées et collées entre elles ou à d'autres parties préfabriquées en utilisant un processus d'infusion sous vide.

13. Procédé selon la revendication 11,
dans lequel une ou plusieurs pièces préfabriquées (13, 14, 18, 19, 23, 24) sont collées à une partie de renforcement de pied (26) dans le moule de jonction (12, 12a, 12b) en utilisant un processus d'infusion sous vide pour former une portion de pied de la pale entière (27) ou de la demi-coque de pale entière (22).

14. Procédé selon la revendication 13,
dans lequel des couches de pied externes (28) sont placées sur la surface de la portion de pied de la pale entière (27) ou de la demi-coque de pale entière (22), et
dans lequel la portion de pied et les couches de pied externes (28) sont collées à l'aide d'un processus d'infusion sous vide.

15. Pale d'éolienne fabriquée à l'aide du procédé selon l'une quelconque des revendications 1 à 14.
